# FASCICULE DE BREVET EUROPEEN

(11) **EP 3 710 626 B1**
(45) Date de publication et mention de la délivrance du brevet: **21.07.2021**
(21) Numéro de dépôt: 18819180.3
(22) Date de dépôt: 09.11.2018
(51) Int. Cl.: D03D 25/00, B29C 70/24, D03D 41/00

(54) **STRUCTURE FIBREUSE ET PIECE EN MATERIAU COMPOSITE INCORPORANT UNE TELLE STRUCTURE**
FASERSTRUKTUR UND BAUTEIL AUS VERBUNDSTOFF MIT EINER SOLCHEN STRUKTUR
FIBROUS STRUCTURE AND COMPONENT MADE OF COMPOSITE MATERIAL INCORPORATING SUCH A STRUCTURE

(30) Priorité: 14.11.2017 US 201762585953 P; 25.06.2018 FR 1855627
(43) Date de publication de la demande: 23.09.2020
(73) Titulaire: Safran Ceramics, 33185 Le Haillan (FR); Albany International Corp., Rochester, NH 03867 (US)
(72) Inventeur: LEFEBVRE, Marie, 77550 Moissy-Cramayel (FR); CHARLEUX, François, 33000 Bordeaux (FR); COUPE, Dominique, 77550 Moissy-Cramayel (FR); GILBERTSON, Brock, Rollinsford, NH 03869 (US); BOUCHET, Julie-Anne, Lee, NH 03861 (US)
(74) Mandataire: Cabinet Beau de Loménie
(86) Numéro de dépôt international: PCT/FR2018/052803
(87) Numéro de publication internationale: WO 2019/097147

(56) Documents cités:
- WO-A1-2017/066259
- US-B2- 7 101 154

## Description

### Arrière-plan de l'invention

La présente invention concerne la réalisation de pièces en matériau composite et plus particulièrement la réalisation par tissage tridimensionnel (3D) ou multicouche de structures fibreuses de renfort pour de telles pièces.

Un domaine d'application de l'invention est la réalisation de pièces en matériau composite structural, c'est-à-dire des pièces de structure à renfort fibreux et densifié par une matrice. Les matériaux composites permettent de réaliser des pièces ayant une masse globale moins élevée que ces mêmes pièces lorsqu'elles sont réalisées en matériau métallique.

L'invention concerne plus particulièrement les pièces en matériau composite comportant localement une ou plusieurs parties de surépaisseur comme c'est le cas par exemple du pied d'une aube de moteur aéronautique qui correspond à une zone de forte variation d'épaisseur dans la pièce en matériau composite. Dans le cas d'une pièce en matériau composite présentant une épaisseur évolutive, le changement d'épaisseur est contrôlé au niveau de la structure fibreuse destinée à former le renfort de la pièce.

La réalisation d'aubes en matériau composite pour des turbomachines a déjà été proposée. On se référera notamment à la demande de brevet US 2011/0311368 déposée conjointement par Snecma et Snecma Propulsion Solide. Cette demande décrit la fabrication d'une aube de turbomachine en matériau composite comprenant un renfort fibreux densifié par une matrice, l'ébauche fibreuse destinée à constituer le renfort est réalisée par tissage multicouche et comporte une première partie d'épaisseur réduite formant préforme de pale et une deuxième partie de surépaisseur formant préforme de pied d'aube. Dans ce cas, la préforme de pied d'aube est réalisée en utilisant un insert afin de former une portion en forme de bulbe au niveau de la partie de l'aube correspondant à son pied.

Cependant, cette technique de formation de pied d'aube complexifie la fabrication industrielle de l'aube et augmente son coût de fabrication car elle engendre des pertes de matière importantes et demande des manipulations délicates qui ralentissent la vitesse de production. En outre, l'insert, lui aussi en matériau composite, doit être densifié et usiné, ce qui entraîne un coût supplémentaire et éventuellement des rejets de pièces.

Le textile de la préforme, mobile par nature, interagit mécaniquement avec l'insert et peut conduire notamment à des cisaillements du textile, rotations de l'insert, déliaisons entre l'insert et le textile, etc.

Par ailleurs, le moulage et la densification de la partie de la préforme destinée à former le pied d'aube s'avèrent délicates en particulier parce que les tolérances sur le profil du pied en forme de bulbe sont très faibles (de l'ordre du dixième de millimètre) et que les exigences en termes de propriétés mécaniques de cette partie de l'aube sont importantes, le pied de l'aube concentrant la majorité des efforts appliqués sur l'aube.

Une autre solution notamment décrite dans les documents US 7 101 154 et US 2011/0311368 consiste à augmenter le titre (donc la section transversale) des fils dans les parties de surépaisseur dans la structure fibreuse afin de réduire la capacité de diminution d'épaisseur lors d'une mise en forme de la structure fibreuse 3D avec compression. Cependant, l'utilisation de fils de titre élevé augmente localement le taux de fibres dans la préforme. Si le taux de fibres est trop important, le réseau de porosité résultant peut ne pas être suffisant pour permettre un bon accès des constituants de la matrice au cœur de la préforme et pour obtenir, par conséquent, un matériau composite homogène présentant de bonnes propriétés mécaniques.

Il est donc souhaitable de pouvoir disposer de structures fibreuses 3D ou multicouches comportant des parties de surépaisseur ne présentant pas les inconvénients précités.

### Objet et résumé de l'invention

A cet effet, l'invention propose, selon un premier aspect, une structure fibreuse comprenant une pluralité de couches de trame et de couches de chaîne liées entre elles suivant un tissage tridimensionnel multicouche, la structure fibreuse comprenant au moins des première et deuxième parties adjacentes dans la direction chaîne, la première partie présentant, dans une direction perpendiculaire aux directions chaîne et trame, une épaisseur supérieure à l'épaisseur de la deuxième partie, la première partie comprend à cœur au moins une texture fibreuse obtenue par tissage tridimensionnel des couches de chaîne et de trame, ou ladite au moins texture fibreuse est sous la forme d'une grille à armure de tissage Mock Leno, ladite au moins une texture étant présente entre des peaux présentes à la surface de la première partie et étant liée aux peaux par des fils de chaîne appartenant auxdites peaux qui sont déviés localement dans ladite texture.

L'utilisation à cœur de la structure fibreuse de la texture fibreuse à armure de tissage Mock Leno permet d'obtenir une forte variation d'épaisseur entre les première et deuxième parties tout en contrôlant le taux de fibres à cœur dans la première partie. En outre, cette texture à armure Mock Leno permet une très bonne infiltration à cœur de la structure fibreuse des constituants de la matrice du fait de sa structure aérée en forme de grille et est compatible avec l'utilisation de torons de titre élevé. La structure fibreuse de l'invention est entièrement textile (i.e. sans ajout d'insert) et les fils de cette dernière sont liés entre eux par tissage 3D ou multicouche ce qui permet à la structure d'être indélaminable.

Une texture à armure de tissage Mock Leno comprend une pluralité de couches de trame et est caractérisée par le fait qu'elle est formée par tissage d'une pluralité de fils de chaîne avec une pluralité de fils de trame et par le fait qu'elle comprend au moins :
- un premier groupe de fils de chaîne comprenant au moins un fil de chaîne de liaison inter-couches liant les fils de trame d'une première couche de la texture aux fils de trame d'une deuxième couche de la texture adjacente à la première couche, et
- un deuxième groupe de fils de chaîne, distinct du premier groupe de fils de chaîne et adjacent à ce dernier dans la direction trame, ledit deuxième groupe comprenant au moins un fil de chaîne de liaison inter-couches liant les fils de trame de la première couche à ceux de la deuxième couche et présentant un sens d'entrelacement avec les fils de trame inversé par rapport au sens d'entrelacement présenté par le fil de chaîne de liaison inter-couches du premier groupe avec les fils de trame.

Dans tout le texte et dans tous les dessins, il est mentionné et représenté par convention et souci de commodité, que ce sont les fils de chaîne qui sont déviés de leurs trajets pour saisir des fils de trame. Toutefois, une inversion des rôles entre chaîne et trame est possible, et doit être considérée comme couverte aussi par les revendications.

Le fait que les fils de chaîne de liaison inter-couches de chacun des premier et deuxième groupes soient entrelacés avec les fils de trame dans des sens d'entrelacement inversés permet d'éviter un contact entre ces deux fils de liaison. Cette caractéristique permet de conserver un espacement non nul le long de la direction trame entre les premier et deuxième groupes de fils de chaîne et donc de conférer à la texture une forme de grille qui présente des canaux ménagés dans son épaisseur, chacun de ces canaux étant délimité dans la direction trame par deux groupes de fils de chaîne adjacents et dans la direction chaîne par deux groupes de fils de trame adjacents. La présence de ces canaux permet de conférer à la texture Mock Leno une structure aérée permettant notamment ainsi la bonne infiltration à cœur des constituants de la matrice.

De préférence, chacun des premier et deuxième groupes de fils de chaîne comprend au moins deux fils de chaîne latéraux situés de chaque côté du fil de chaîne de liaison inter-couches, chacun de ces fils de chaîne latéraux étant entrelacé avec les fils de trame de la première couche.

De préférence encore, les fils de chaîne latéraux du premier groupe présentent un sens d'entrelacement avec les fils de trame qui est inversé par rapport au sens d'entrelacement présenté par les fils de chaîne latéraux du deuxième groupe avec les fils de trame.

Dans un exemple de réalisation, la texture fibreuse à armure de tissage Mock Leno présente, dans une direction perpendiculaire aux directions chaîne et trame, une épaisseur décroissante en direction de la deuxième partie.

Une telle caractéristique est avantageuse afin de contrôler la géométrie de la première partie et assurer la transition d'épaisseur avec la deuxième partie.

Dans un exemple de réalisation, les première et deuxième parties comprennent le même nombre de fils de chaîne tissés continûment entre lesdites première et deuxième parties et la première partie comprend à cœur un nombre de couches de fils de chaîne supérieur au nombre de couches de fils de chaîne présentes à cœur de la deuxième partie.

En divisant ainsi (i.e. en faisant varier la contexture) des couches de fils de chaîne à cœur dans la première partie, il est possible de contrôler le taux de fibre à cœur dans la première partie tout en maintenant un ratio chaîne/trame satisfaisant en peau sur toute la structure fibreuse. La première partie peut par exemple comprendre à cœur un nombre de couches de fils de chaîne égal au double du nombre de couches de fils de chaîne présentes à cœur de la deuxième partie.

Dans un exemple de réalisation, la structure comprend des fils de carbone ou des fils en matériau céramique. Le matériau céramique des fils peut par exemple être un matériau oxyde, comme l'alumine, ou un matériau non-oxyde, comme le carbure de silicium.

La présente invention vise également une pièce en matériau composite comprenant un renfort fibreux densifié par une matrice, ledit renfort fibreux étant constitué par une structure fibreuse telle que décrite plus haut.

Dans un exemple de réalisation, la pièce correspond à une aube de turbine, la première partie de la structure fibreuse constituant la partie de pied d'aube du renfort fibreux.

La présente invention vise également un procédé de fabrication d'une structure fibreuse par tissage tridimensionnel multicouche entre une pluralité de couches de trame et de couches de chaîne, la structure fibreuse comprenant au moins des première et deuxième parties adjacentes dans la direction chaîne, la première partie présentant, dans une direction perpendiculaire aux directions chaîne et trame, une épaisseur supérieure à l'épaisseur de la deuxième partie, la réalisation de la première partie comprend une étape de tissage tridimensionnel des couches de chaîne et de trame dans laquelle on forme une texture fibreuse sous la forme d'une grille à armure de tissage Mock Leno à cœur de la première partie ainsi que des peaux en surface de la première partie, l'armure de tissage des peaux étant modifiée localement de manière à dévier certains fils de chaîne desdites peaux et à les tisser avec la texture à armure Mock Leno.

Dans un exemple de réalisation d'un tel procédé, la texture à armure Mock Leno présente, dans une direction perpendiculaire aux directions chaîne et trame, une épaisseur décroissante en direction de la deuxième partie.

Dans un exemple de réalisation d'un tel procédé, les première et deuxième parties comprennent le même nombre de fils de chaîne tissés continûment entre lesdites première et deuxième parties et la première partie comprend à cœur un nombre de couches de fils de chaîne supérieur au nombre de couches de fils de chaîne présentes à cœur de la deuxième partie.

Dans un exemple de réalisation d'un tel procédé, la première partie comprend à cœur un nombre de couches de fils de chaîne égal au double du nombre de couches de fils de chaînes présentes à cœur de la deuxième partie.

Dans un exemple de réalisation d'un tel procédé, la structure fibreuse comprend des fils de carbone ou des fils en matériau céramique. Le matériau céramique des fils peut par exemple être un matériau oxyde, comme l'alumine, ou un matériau non-oxyde, comme le carbure de silicium.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique illustrant le tissage multicouche d'une structure fibreuse pour la fabrication d'une aube de moteur aéronautique conformément à un mode de réalisation de l'invention,
- les figures 2 à 17 sont des vues en coupe trame à échelle agrandie représentant partiellement 16 plans successifs d'une armure de tissage d'une partie de surépaisseur de la structure fibreuse de la figure 1,
- la figure 18 est une vue schématique en perspective d'une préforme fibreuse d'aube issue de la structure fibreuse de la figure 1,
- la figure 19 est une vue schématique en perspective d'une aube en matériau composite obtenue par densification par une matrice de la préforme de la figure 18, et
- la figure 20 est une photographie montrant une texture tissée à armure Mock-Leno.

### Description détaillée de modes de réalisation

L'invention s'applique d'une manière générale à la réalisation de structures fibreuses aptes à constituer des renforts fibreux, ou préformes, pour la fabrication de pièces en matériau composite, en particulier des aubes de moteurs aéronautiques, les pièces étant obtenues par densification des structures fibreuses par une matrice. La matrice est typiquement une résine, dans le cas de matériaux composites utilisés à température relativement peu élevée, typiquement jusqu'à 300°C, ou un matériau réfractaire tel que du carbone ou céramique, par exemple du carbure de silicium, dans le cas de composites thermostructuraux.

La structure fibreuse de l'invention est obtenue par tissage tridimensionnel ou par tissage multicouche.

Par "tissage tridimensionnel" ou "tissage 3D", on entend ici un mode de tissage par lequel certains au moins des fils de chaîne lient des fils de trame sur plusieurs couches de trame.

Par "tissage multicouche", on désigne ici un tissage 3D avec plusieurs couches de trame dont l'armure de base de chaque couche est équivalente à une armure de tissu 2D classique, telle qu'une armure de type toile, satin ou sergé, mais avec certains points de l'armure qui lient les couches de trame entre elles.

La réalisation de la structure fibreuse par tissage 3D ou multicouche permet d'obtenir une liaison entre les couches, donc d'avoir une bonne tenue mécanique de la structure fibreuse et de la pièce en matériau composite obtenue, en une seule opération textile.

Il est avantageux de favoriser l'obtention, après densification, d'un état de surface exempt d'irrégularités importantes, c'est-à-dire un bon état de finition pour éviter ou limiter des opérations de finition par usinage ou pour éviter la formation d'amas de résine dans le cas de composites à matrice résine. A cet effet, dans le cas d'une structure fibreuse ayant une partie interne, ou cœur, et une partie externe, ou peau adjacente à une surface extérieure de la structure fibreuse, la peau est réalisée de préférence par tissage avec une armure de type toile, satin ou sergé afin de limiter les irrégularités de surface, une armure de type satin procurant en outre un aspect de surface lisse. Une variation d'armure de tissage en peau peut être réalisée à la surface extérieure de la structure fibreuse pour conférer des propriétés particulières voulues par exemple en passant d'une armure de type toile privilégiant une liaison serrée à une armure de type satin privilégiant un état de surface lisse.

Conformément à l'invention, afin de former une portion de forte épaisseur dans la structure fibreuse tout en contrôlant le taux de fibres dans cette portion, une texture fibreuse de type Mock-Leno est utilisée pour le tissage à cœur de la structure fibreuse. Des fils ou torons de titres différents entre cœur et peau et/ou entre chaîne et trame peuvent également être utilisés pour obtenir un rapport dans des limites souhaitées entre le taux volumique de fibres en chaîne et le taux volumique de fibres en trame.

Il est aussi avantageux pour obtenir des propriétés mécaniques aussi peu inhomogènes que possible au sein d'une pièce en matériau composite, de favoriser une densification de la structure fibreuse de renfort, avec un gradient de densification aussi faible que possible entre le cœur de la structure fibreuse et la peau de celle-ci, notamment dans le cas de densification CVI. A cet effet, pour favoriser l'accès au cœur de la préforme, le tissage à cœur est réalisé par un tissage de type Mock-Leno, qui offre une communication aisée aux constituants de la matrice du fait de sa structure aérée en forme de grille.

Il peut être souhaitable de faire varier le titre, c'est-à-dire la section transversale, des fils ou torons utilisés pour le tissage de la structure fibreuse, en particulier en utilisant des fils ou torons de titres différents entre cœur et peau et/ou entre chaîne et trame. Un titre décroissant entre cœur et peau favorise l'accès à cœur du gaz à travers la peau dans le cas de densification CVI. Les titres peuvent aussi être choisis pour obtenir un rapport dans les limites souhaitées entre le taux volumique de fibres en chaîne et le taux volumique de fibres en trame.

On peut, selon un exemple, utiliser des tresses pour former tout ou partie du cœur de la structure fibreuse et utiliser des fils ou torons d'épaisseur plus faible que les tresses en peau de la structure fibreuse. Un tel exemple permet d'augmenter davantage encore l'épaisseur de la structure fibreuse tout en contrôlant le taux moyen de fibres.

Il peut être souhaitable en outre d'utiliser des fils de natures chimiques différentes entre différentes parties de la structure fibreuse, notamment entre cœur et peau pour conférer des propriétés particulières à la pièce en matériau composite obtenue, notamment en termes de résistance à l'oxydation ou à l'usure.

Un exemple de réalisation d'une structure fibreuse conformément à l'invention est maintenant décrit. Dans cet exemple, le tissage est réalisé sur un métier de type Jacquard.

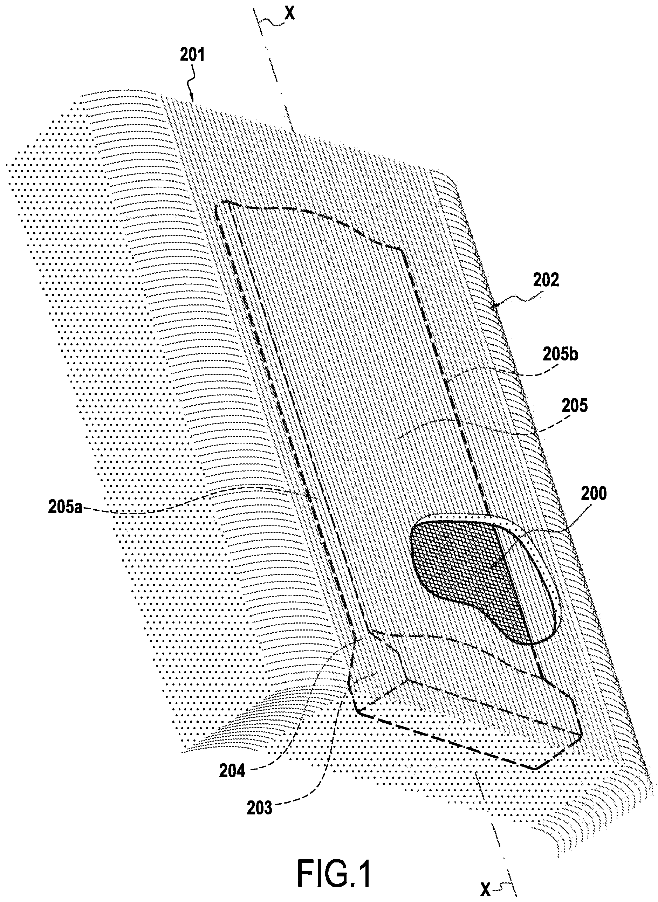

La figure 1 montre très schématiquement une structure fibreuse 200 destinée à former le renfort fibreux d'une aube de moteur aéronautique.

La structure fibreuse 200 est obtenue par tissage tridimensionnel, ou tissage 3D, ou par tissage multicouche réalisé de façon connue au moyen d'un métier à tisser de type Jacquard sur lequel on a disposé un faisceau de fils de chaînes ou torons 201 en une pluralité de couches, les fils de chaînes liant des fils de trame 202 également disposés en une pluralité de couches. Un exemple détaillé de réalisation d'une préforme fibreuse destinée à former le renfort fibreux d'une aube pour moteur aéronautique est notamment décrit dans les documents US 7 101 154, US 7 241 112 et WO 2010/061140.

La structure fibreuse 200 est tissée sous forme d'une bande s'étendant de façon générale dans une direction X correspondant à la direction longitudinale de l'aube à réaliser. La structure fibreuse présente une épaisseur variable déterminée en fonction de l'épaisseur longitudinale et du profil de la pale de l'aube à réaliser. Dans sa partie destinée à former une préforme de pied, la structure fibreuse 200 présente une partie de surépaisseur 203 déterminée en fonction de l'épaisseur du pied de l'aube à réaliser. La structure fibreuse 200 se prolonge par une partie d'épaisseur décroissante 204 destinée à former l'échasse de l'aube puis par une partie 205 destinée à former la pale de l'aube. La partie 205 présente dans une direction perpendiculaire à la direction X un profil à épaisseur variable entre son bord 205a destiné à former le bord d'attaque de l'aube et son bord 205b destiné à former le bord de fuite de l'aube à réaliser.

La structure fibreuse 200 est tissée en une seule pièce et doit présenter, après découpe des fils non tissés, la forme et les dimensions quasi-définitives de l'aube (« net shape »). A cet effet, dans les parties de variations d'épaisseur de la structure fibreuse, comme dans la partie d'épaisseur décroissante 204, la diminution d'épaisseur de la préforme est obtenue en retirant progressivement des couches de trame au cours du tissage.

On utilise ici le même nombre de fils de chaîne dans la portion de surépaisseur 203 que dans la partie d'épaisseur décroissante 204. A cet effet, les couches de fils de chaîne présentes à cœur dans la partie de surépaisseur 203 sont éclatées de manière à disposer d'un nombre de couches de fils de chaîne plus élevé dans la partie de surépaisseur 203 que dans la partie d'épaisseur décroissante 204. Les couches de fils de chaîne présentes au cœur de la partie de surépaisseur 203 présentent alors une contexture plus faible que les couches de fils de chaîne présentes dans la partie d'épaisseur décroissante 204. Par "contexture", on désigne ici le nombre de fils par unité de longueur en sens chaîne et en sens trame.

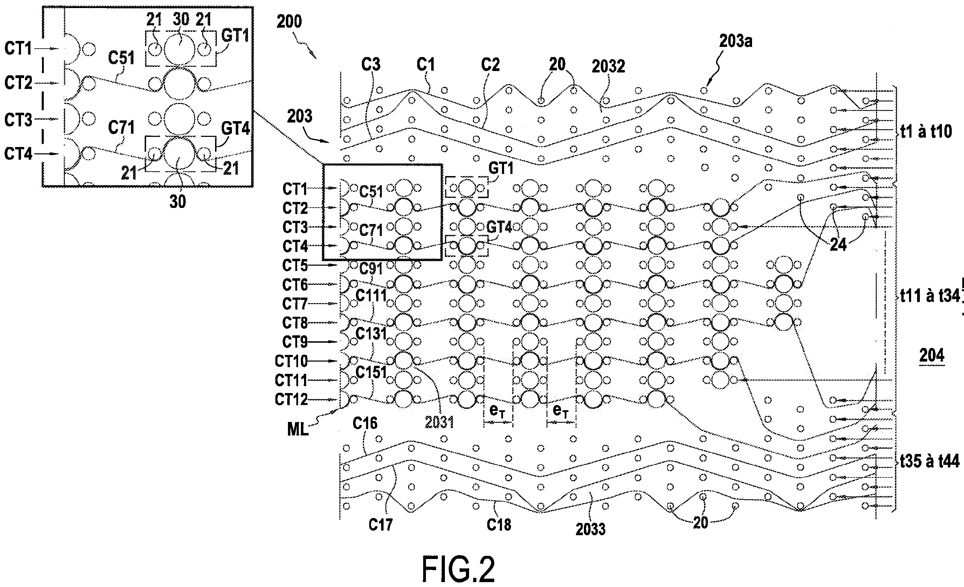

Les figures 2 à 17 représentent partiellement 16 plans successifs d'une armure de tissage de la partie de surépaisseur 203 de la structure fibreuse 200 obtenues par tissage 3D, les couches de trame étant visibles en coupe.

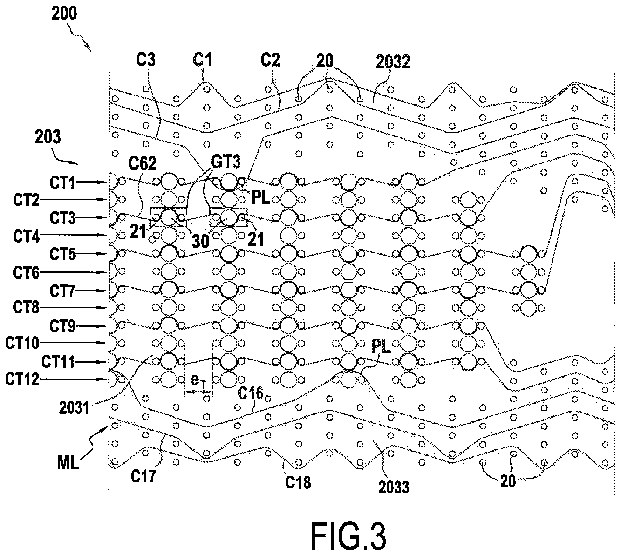

La structure fibreuse 200 comprend, dans sa partie de surépaisseur 203, 22 couches de trame, soit 44 demi-couches de trame t1 à t44. La première peau 2032 comprend les demi-couches de trame t1 à t10, la deuxième peau 2033 les demi-couches de trame t35 à t44 et le cœur les demi-couches de trame t11 à t34. Dans le cœur 2031 situé entre les peaux opposées 2032 et 2033, le tissage 3D est de type Mock Leno (texture ML). Dans les peaux 2032 et 2033 le tissage est tridimensionnel. Dans la peau 2032, les demi-couches de trame t1 et t2 sont reliées par une armure de type satin irrégulier. De manière similaire, dans la peau 2033, les demi-couches de trame t43 et t44 sont reliées par une armure de type satin irrégulier. Une pluralité de fils de chaîne C1, C2, C3, C16, C17 et C18 lient des fils de trame 20 au niveau des peaux 2032 et 2033. La texture Mock Leno ML du cœur 2031 est liée aux peaux 2032 et 2033 par déviation de fils de chaîne des peaux dans cette texture ML (voir par exemple les fils C3 et C16 sur figure 3). La déviation de ces fils de chaîne forme des points de liaison PL liant la texture Mock Leno ML aux peaux 2032 et 2033.

Dans sa partie d'épaisseur décroissante 204, des couches de trame sont progressivement retirées jusqu'à atteindre un nombre de couches de trame compatible avec la partie 205 destinée à former la pale de l'aube.

La texture Mock Leno ML présente à cœur 2031 de la première partie 203 comprend une pluralité de couches CT1-CT12 de fils de trame (voir figure 2 notamment). Dans l'exemple illustré, la texture Mock Leno comprend douze couches de fils de trame mais on ne sort pas du cadre de l'invention si celle-ci comprend un nombre de couches de fils de trame différent. Des fils de chaîne comme par exemple C51, C71, C91, C111, C131 et C151 visibles sur la figure 2 sont entrelacés avec les fils de trame 21 et 30 dans cette texture ML.

La texture Mock Leno ML présente par ailleurs, dans une direction perpendiculaire aux directions chaîne et trame, une épaisseur décroissante en direction de la deuxième partie 204. Le fait de diminuer progressivement l'épaisseur de cette texture ML permet de contrôler le taux de fibres dans une zone 203a correspondant au passage entre la fin de la partie de surépaisseur 203 et le début de la partie d'épaisseur décroissante 204, c'est-à-dire la zone où l'épaisseur de la structure fibreuse commence à diminuer. Dans l'exemple décrit ici, les fils de trame de la texture Mock Leno ML sont progressivement remplacés dans la direction chaîne par des fils de trame 24 ayant le même titre que les fils de trame 20 présents dans la partie d'épaisseur décroissante 204 et dans les peaux 2032 et 2033 de la structure fibreuse.

Dans la texture Mock Leno ML, chaque couche de fils de trame CT1-CT12 comprend une pluralité de groupes de fils de trame notés à la figure 2 GT1 pour les groupes de fils de trame de la première couche CT1 de la texture ML et GT4 pour les groupes de fils de trame de la quatrième couche de cette texture ML par exemple.

Les colonnes de fils de trame adjacentes de la texture Mock Leno ML sont espacées d'un espacement e_{T} non nul le long de la direction chaîne. En particulier, les groupes de fils de trame adjacents d'une même couche CTi, avec i variant de 1 à 12 dans l'exemple illustré, sont espacés de l'espacement e_{T}. L'espacement e_{T} peut être sensiblement constant le long de la direction chaîne comme illustré ou, en variante, être variable le long de cette direction.

La texture Mock Leno ML se présente sous la forme d'une grille ayant des canaux traversants le long de son épaisseur. Comme il sera détaillé dans la suite, la présence de chacun de ces canaux traversants résulte de l'espacement non nul existant, d'une part, entre les groupes de fils de trame adjacents et, d'autre part, entre les groupes de fils de chaîne adjacents.

Dans l'exemple illustré aux figures 2 à 17, chacun des groupes de fils de trame comprend au moins deux fils latéraux 21 entre lesquels est présent au moins un fil central 30. Chacun des groupes de fils de trame comprend donc au moins trois fils. Dans l'exemple illustré, le fil central 30 est un toron de diamètre supérieur à celui des deux fils latéraux 21. L'exemple illustré concerne des groupes de fils de trame comprenant chacun trois fils de trame. On ne sort toutefois pas du cadre de l'invention lorsque les groupes de fils de trame comprennent chacun plus de trois fils de trame. On pourrait en variante remplacer le toron 30 par une tresse ou encore par plusieurs fils centraux disposés côte à côte de diamètre égal ou différent de celui des fils latéraux 21. Aussi, comme il sera décrit plus bas, la texture ML comprend dans l'exemple illustré une pluralité de groupes de fils de chaîne comprenant chacun huit fils de chaîne. On ne sort pas du cadre de l'invention si la texture Mock Leno comprend des groupes de fils de chaîne ayant chacun un nombre de fils de chaîne différent de huit. Ainsi, plus généralement, chacun des groupes de fils de chaîne peut comprendre au moins trois fils de chaîne. En outre dans l'exemple illustré, le nombre de fils de chaîne dans chacun des groupes de fils de chaîne est différent du nombre de fils de trame dans chacun des groupes de fils de trame mais on ne sort pas du cadre de l'invention lorsque ces nombres de fils sont égaux.

La liaison des fils de chaîne avec les fils de trame va désormais être décrite plus en détails en lien avec les différentes coupe trame illustrées aux figures 2 à 17. Dans une coupe trame donnée, les fils de chaîne de la texture à armure Mock Leno ont tous le même sens d'entrelacement avec les fils de trame. Par conséquent, pour des raisons de concision, l'entrelacement d'un seul fil de chaîne avec les fils de trame va être discuté dans la suite pour chacun des plans d'armure représentés aux figures 2 à 17.

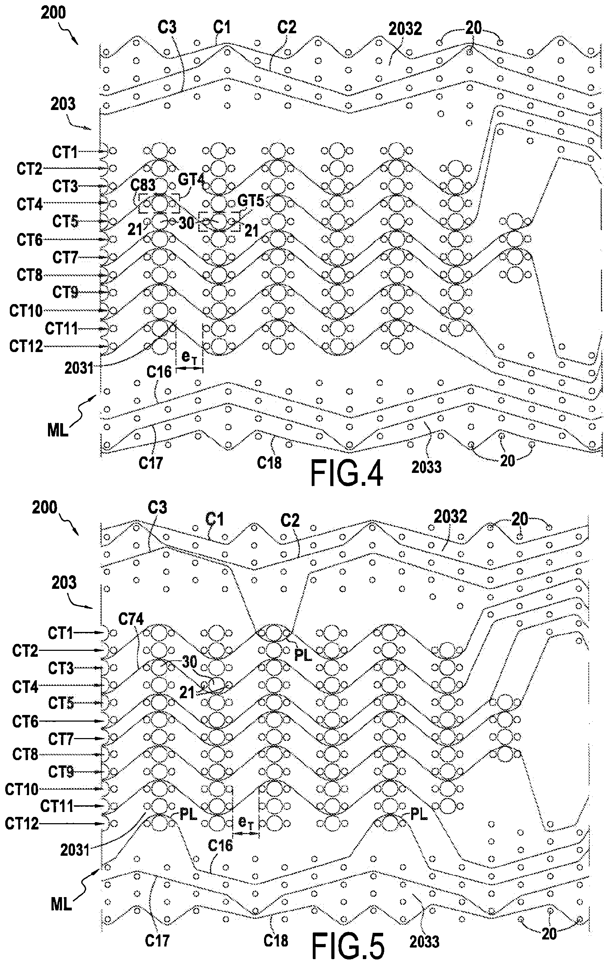

On voit à la figure 4 que le fil de chaîne C83 de liaison inter-couches du premier groupe de fils de chaîne lie les fils de trame de la couche CT4 de la texture Mock Leno aux fils de trame de la couche CT5 de cette texture. Plus précisément, le fil de chaîne C83 passe alternativement au-dessus de chacun des fils d'un groupe de fils de trame GT4 d'une première couche CT4 et au-dessous de chacun des fils d'un groupe de fils de trame GT5 d'une deuxième couche CT5. Concrètement, le fil C83 passe au-dessus de chacun des fils d'un premier groupe GT4 de fils de trame de la première couche CT4, puis en dessous de chacun des fils d'un deuxième groupe GT5 de fils de trame de la deuxième couche CT5 puis à nouveau au-dessus de chacun des fils d'un troisième groupe GT4 de fils de trame de la première couche CT4 et ainsi de suite.

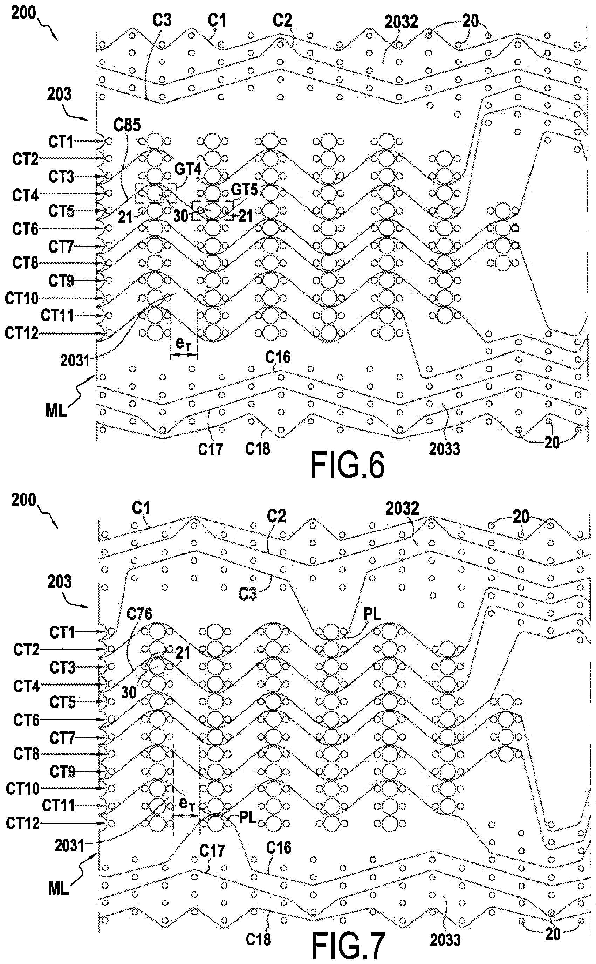

Ce qui vient d'être décrit pour le fil de chaîne de liaison inter-couches C83 du premier groupe est applicable au fil de chaîne de liaison inter-couches C85 du premier groupe (voir figure 6).

Des remarques similaires s'appliquent aussi aux fils de chaîne de liaison C74 et C76 du premier groupe de fils de chaîne qui lient chacun les fils de trame de la couche CT3 de la texture Mock Leno aux fils de trame de la couche CT4 de cette texture (voir figures 5 et 7).

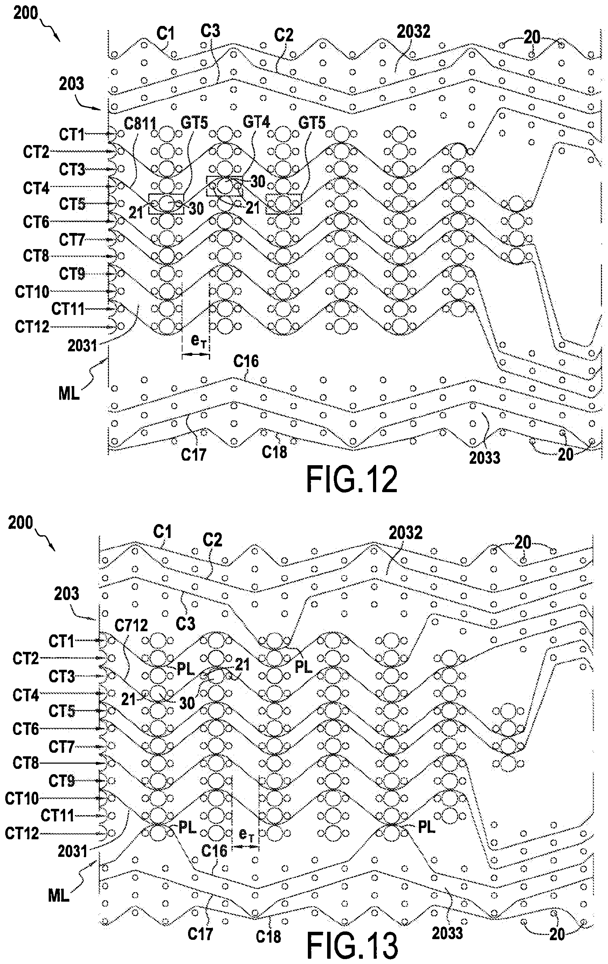

Relativement au deuxième groupe de fils de chaîne, on voit en référence à la figure 12 que le fil de chaîne C811 de liaison inter-couches du deuxième groupe de fils de chaîne lie les fils de trame de la couche CT4 de la texture Mock Leno aux fils de trame de la couche CT5 de cette texture. Plus précisément, le fil de chaîne C811 passe alternativement au-dessus de chacun des fils d'un groupe GT4 de fils de trame de la première couche CT4 et au-dessous de chacun des fils d'un groupe GT5 de fils de trame de la deuxième couche CT5. Concrètement, le fil C811 passe au-dessus de chacun des fils d'un premier groupe GT4 de fils de trame de la première couche CT4, puis en dessous de chacun des fils d'un deuxième groupe GT5 de fils de trame de la deuxième couche CT5 puis à nouveau au-dessus de chacun des fils d'un troisième groupe GT4 de fils de trame de la première couche CT4 et ainsi de suite.

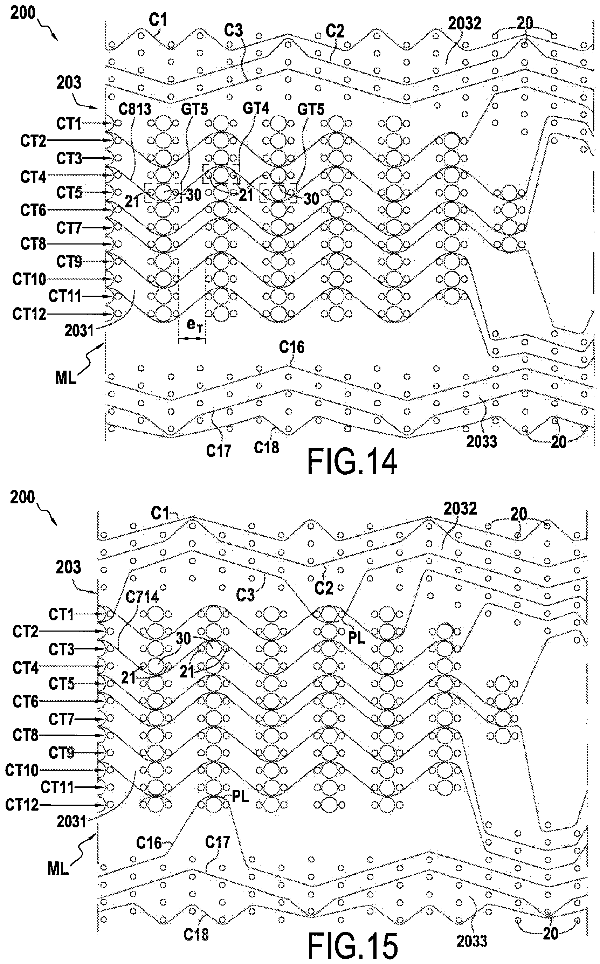

Ce qui vient d'être décrit pour le fil de chaîne de liaison inter-couches C811 du deuxième groupe est applicable au fil de chaîne de liaison inter-couches C813 du deuxième groupe (voir figure 14).

Des remarques similaires s'appliquent aussi aux fils de chaîne de liaison C712 et C714 du deuxième groupe de fils de chaîne qui lient chacun les fils de trame de la couche CT3 de la texture Mock Leno aux fils de trame de la couche CT4 de cette texture (voir figures 13 et 15).

On remarque toutefois que le fil de chaîne C811 présente un sens d'entrelacement avec les fils de trame inversé par rapport au sens d'entrelacement présenté par le fil de chaîne C85 avec les fils de trame. En d'autres termes, dans ce cas dans une colonne de trame donnée, lorsque le fil de chaîne C811 passe au-dessus de chacun des fils d'un groupe de fils de trame de la première couche CT4, le fil de chaîne C85 passe en dessous de chacun des fils d'un groupe de fils de trame de la deuxième couche CT5. De manière analogue, dans ce cas dans une colonne de trame donnée, lorsque le fil de chaîne C811 passe en dessous de chacun des fils d'un groupe de fils de trame de la deuxième couche CT5, le fil de chaîne C85 passe au-dessus de chacun des fils d'un groupe de fil de trame de la première couche CT4. Le fil de liaison C83 du premier groupe présente lui aussi un sens d'entrelacement avec les fils de trame inversé par rapport au sens d'entrelacement présenté par le fil de liaison C813 avec les fils de trame.

Comme mentionné plus haut, ce sens d'entrelacement inversé entre les fils de liaison inter-couches des premier et deuxième groupes de fils de chaîne participe à l'obtention d'un espacement non nul entre les premier et deuxième groupes de fils de chaîne et donc à la formation d'une texture fibreuse sous la forme d'une grille dont les canaux de porosité présentent une accessibilité améliorée. A noter aussi que le fait que les fils de liaison d'un même groupe de fils de chaîne aient le même sens d'entrelacement avec les fils de trame permet d'autoriser le rapprochement entre fils de liaison d'un même groupe de fils de chaîne et participe donc aussi à la formation des canaux de porosité (regroupement compact de fils d'un même groupe).

Il est aussi à noter que la texture Mock Leno ML présente, lorsque l'on se déplace dans la direction trame, une alternance entre des premiers groupes de fils de chaîne et des deuxièmes groupes de fils de chaîne à sens d'entrelacement inversé. En d'autres termes, lorsque l'on se déplace dans la direction trame, la texture Mock Leno ML présente successivement un premier groupe de fils de chaîne puis un deuxième groupe de fils de chaîne puis à nouveau un premier groupe de fils de chaîne puis à nouveau un deuxième groupe de fils de chaîne et ainsi de suite. Chacun des premiers groupes de fils de chaîne est adjacent à un deuxième groupe de fils de chaîne.

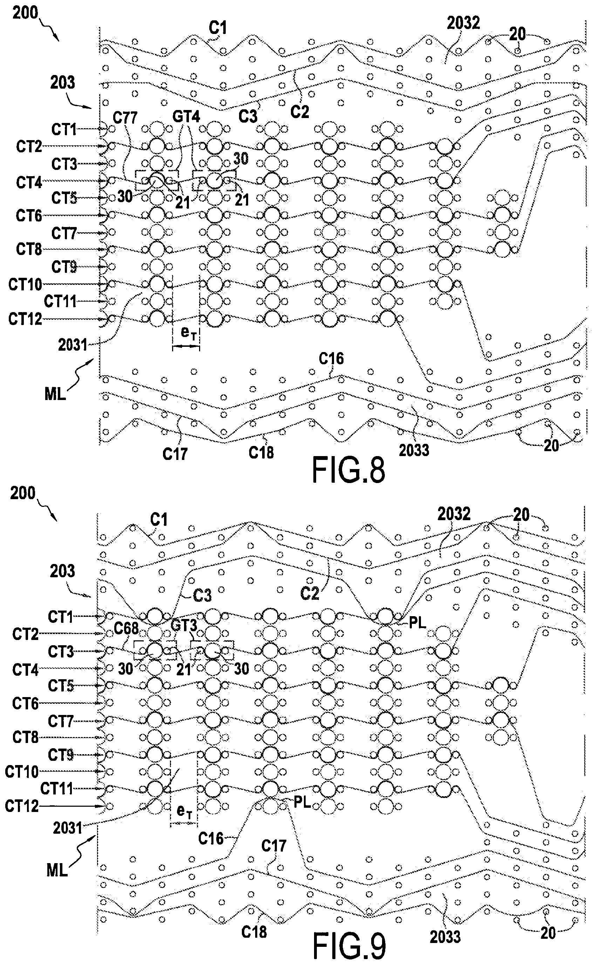

En lien avec les figures 2 et 8, il peut être constaté que le premier groupe de fils de chaîne comprend en outre au moins un premier fil de chaîne latéral C71 situé d'un premier côté du fil de liaison inter-couches C83 ainsi qu'au moins un deuxième fil de chaîne latéral C77 situé d'un deuxième côté du fil de liaison C83, le deuxième côté étant opposé au premier côté dans la direction trame. En d'autres termes, le fil de liaison inter-couches C83 est présent entre les fils de chaîne latéraux C71 et C77. Plus précisément dans l'exemple illustré, les fils de liaison inter-couches C83 et C85 du premier groupe de fils de chaîne sont tous deux présents entre les fils latéraux C71 et C77 du premier groupe de fils de chaîne. Chacun des fils de chaîne latéraux C71 et C77 est entrelacé avec plusieurs groupes GT4 de fils de trame de la première couche CT4.

Le fil de chaîne C71 passe en dessous d'un premier fil latéral 21 d'un premier groupe de fils de trame GT4, puis au-dessus du fil central 30 de ce premier groupe puis en dessous d'un deuxième fil latéral 21 de ce premier groupe. Le fil de chaîne C71 passe ensuite au-dessus d'un premier fil latéral 21 d'un deuxième groupe de fils de trame GT4 adjacent au premier groupe dans la direction chaîne, puis en dessous du fil central 30 de ce deuxième groupe puis au-dessus d'un deuxième fil latéral 21 de ce deuxième groupe et ainsi de suite. Le fil de chaîne C71 passe alternativement en dessous des fils latéraux 21 d'un groupe GT4 de fils de trame et au-dessus des fils latéraux 21 du groupe GT4 de fils de trame adjacent dans la direction chaîne. Le fil de chaîne C71 passe alternativement au-dessus du fil central 30 d'un groupe GT4 de fils de trame et en dessous du fil central 30 du groupe GT4 de fils de trame adjacent dans la direction chaîne.

Les mêmes remarques s'appliquent au deuxième fil de chaîne latéral C77 qui présente le même sens d'entrelacement avec les fils de trame que le premier fil de chaîne C71 (voir figure 8).

Des remarques similaires s'appliquent aussi aux fils de chaîne latéraux C62 et C68 du premier groupe de fils de chaîne qui sont chacun entrelacés avec plusieurs groupes GT3 de fils de trame de la troisième couche de trame CT3 (voir figures 3 et 9).

Dans une variante non illustrée où chacun des groupes de fils de trame comporterait deux fils de trame latéraux entre lesquels sont présents au moins deux fils de trame centraux, on pourrait avoir un fil de chaîne qui passerait en dessous d'un premier fil latéral d'un premier groupe de fils de trame, puis au-dessus de chacun des fils centraux de ce premier groupe puis en dessous d'un deuxième fil latéral de ce premier groupe. Ce fil de chaîne pourrait ensuite passer au-dessus d'un premier fil latéral d'un deuxième groupe de fils de trame adjacent au premier groupe dans la direction chaîne, puis en dessous de chacun des fils centraux de ce deuxième groupe puis au-dessus d'un deuxième fil latéral de ce deuxième groupe et ainsi de suite. Cela est valable pour les premier et deuxième groupes de fils de chaîne présent dans la texture Mock Leno selon une telle variante.

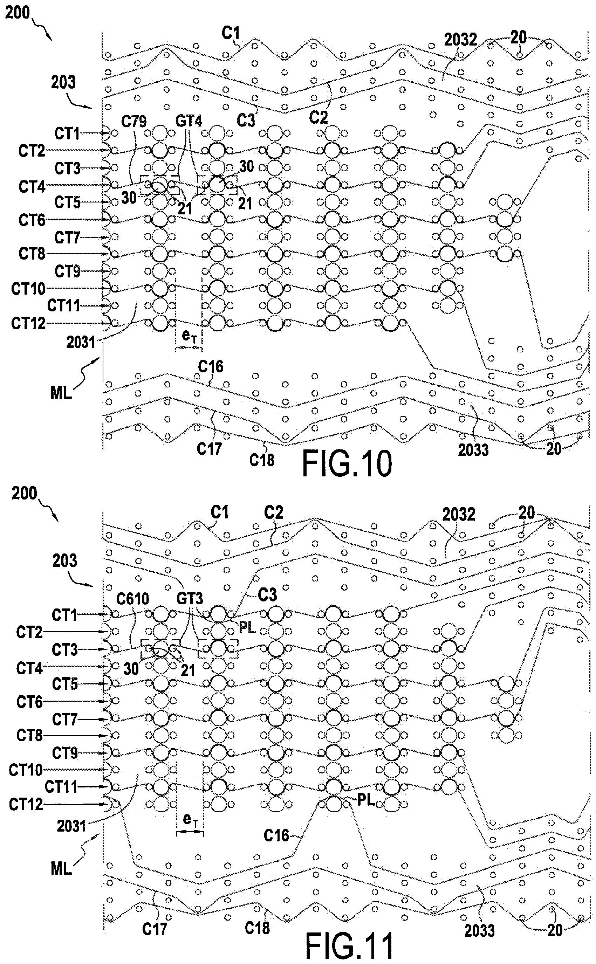

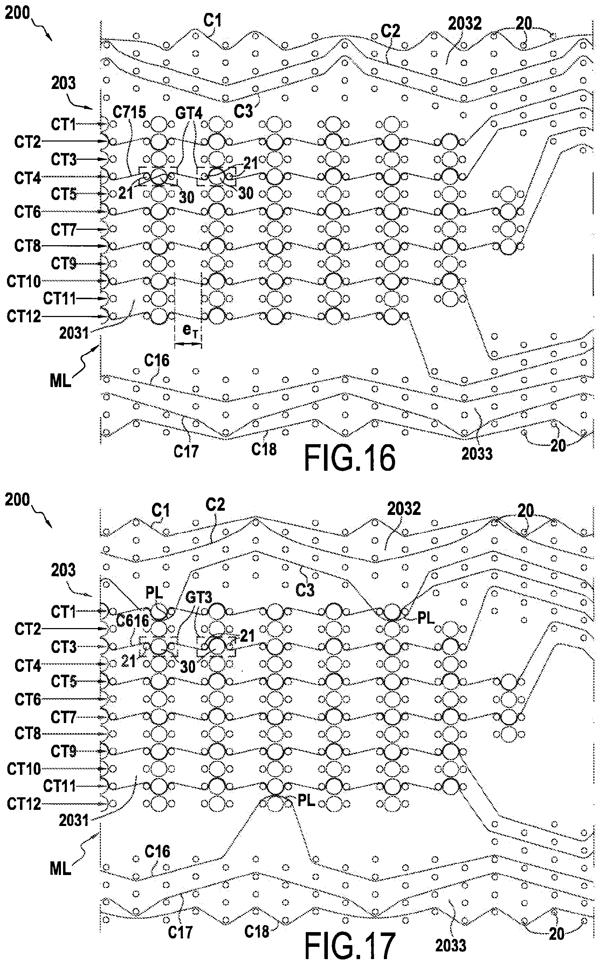

Relativement au deuxième groupe de fils de chaîne, on voit en référence aux figures 10 et 16 que le deuxième groupe de fils de chaîne comprend en outre au moins un premier fil de chaîne latéral C79 situé d'un premier côté du fil de liaison inter-couches C811 ainsi qu'au moins un deuxième fil de chaîne latéral C715 situé d'un deuxième côté du fil de liaison C811, le deuxième côté étant opposé au premier côté dans la direction trame. En d'autres termes, le fil de liaison inter-couches C811 est présent entre les fils de chaîne latéraux C79 et C715. Plus précisément, dans l'exemple illustré, les fils de liaison inter-couches C811 et C813 du deuxième groupe de fils de chaîne sont tous deux présents entre les fils latéraux C79 et C715 du deuxième groupe de fils de chaîne. Chacun des fils de chaîne latéraux C79 et C715 est entrelacé avec plusieurs groupes de fils de trame de la première couche CT4.

Le fil de chaîne C79 passe au-dessus d'un premier fil latéral 21 d'un premier groupe de fils de trame GT4, puis au-dessous du fil central 30 de ce premier groupe puis au-dessus d'un deuxième fil latéral 21 de ce premier groupe. Le fil de chaîne C79 passe ensuite en dessous d'un premier fil latéral 21 d'un deuxième groupe de fils de trame GT4 adjacent au premier groupe dans la direction chaîne, puis au-dessus du fil central 30 de ce deuxième groupe puis en dessous d'un deuxième fil latéral 21 de ce deuxième groupe et ainsi de suite. Le fil de chaîne C79 passe alternativement au-dessus des fils latéraux 21 d'un groupe GT4 de fils de trame et en dessous des fils latéraux 21 du groupe GT4 de fils de trame adjacent dans la direction chaîne. Le fil de chaîne C79 passe alternativement en dessous du fil central 30 d'un groupe GT4 de fils de trame et au-dessus du fil central 30 du groupe GT4 de fils de trame adjacent dans la direction chaîne.

Les mêmes remarques s'appliquent au deuxième fil de chaîne latéral C715 qui présente le même sens d'entrelacement avec les fils de trame que le premier fil de chaîne C79 (voir figure 16).

Des remarques similaires s'appliquent aussi aux fils de chaîne latéraux C610 et C616 du deuxième groupe de fils de chaîne qui sont chacun entrelacés avec plusieurs groupes GT3 de fils de trame de la troisième couche de trame CT3 (voir figures 11 et 17).

On remarque toutefois que le fil de chaîne C79 présente un sens d'entrelacement avec les fils de trame inversé par rapport au sens d'entrelacement présenté par le fil de chaîne C77 avec les fils de trame. En d'autres termes, dans ce cas, lorsque le fil de chaîne C79 passe au-dessus de chacun des fils latéraux 21 d'un groupe de fils de trame donné, le fil de chaîne C77 passe en dessous de chacun des fils latéraux 21 de ce même groupe. De manière analogue, dans ce cas, lorsque le fil de chaîne C79 passe en dessous du fil central 30 d'un groupe de fils de trame donné, le fil de chaîne 77 passe au-dessus du fil central 30 de ce même groupe. Le fil de chaîne C71 présente aussi un sens d'entrelacement avec les fils de trame inversé par rapport au sens d'entrelacement présenté par le fil de chaîne C715 avec les fils de trame.

Comme mentionné plus haut, ce sens d'entrelacement inversé entre les fils latéraux des premier et deuxième groupes de fils de chaîne participe à l'obtention d'un espacement non nul entre les premier et deuxième groupes de fils de chaîne et donc à la formation d'une texture fibreuse sous la forme d'une grille dont les canaux de porosité sont particulièrement accessibles. A noter aussi que le fait que les fils latéraux d'un même groupe de fils de chaîne aient le même sens d'entrelacement avec les fils de trame permet d'autoriser le rapprochement entre fils latéraux d'un même groupe de fils de chaîne et participe donc aussi à la formation des canaux de porosité (regroupement compact de fils d'un même groupe).

L'utilisation d'une texture Mock Leno à cœur de la première partie de la structure fibreuse permet d'augmenter de façon importante l'épaisseur de la structure fibreuse tout en contrôlant le taux moyen de fibres à cœur, ce qui n'est le cas lorsqu'on utilise uniquement des fils ayant un titre élevé à cœur. En effet, en utilisant des fils ayant un titre élevé à cœur de la structure, il est certes possible d'augmenter localement l'épaisseur de la structure mais cela entraîne une augmentation du taux moyen de fibres à cœur incompatible avec les propriétés mécaniques requises. Lorsque le taux moyen de fibres à cœur est trop élevé, il n'est pas possible d'avoir un réseau de porosités suffisant pour permettre un bon accès des constituants de la matrice au cœur de la structure fibreuse. La quantité de matrice présente à cœur est alors insuffisante, ce qui ne permet pas d'obtenir une pièce en matériau composite qui présente, de façon homogène, les propriétés mécaniques requises. Ce problème est résolu par l'utilisation de la texture Mock Leno qui, grâce à ses canaux traversants ménagés dans son épaisseur, permet d'augmenter localement l'épaisseur de la structure tout en limitant l'augmentation du taux moyen de fibres. On obtient ainsi une structure fibreuse qui offre dans ses parties de surépaisseur un très bon accès à cœur pour les constituants de la matrice lors de sa densification.

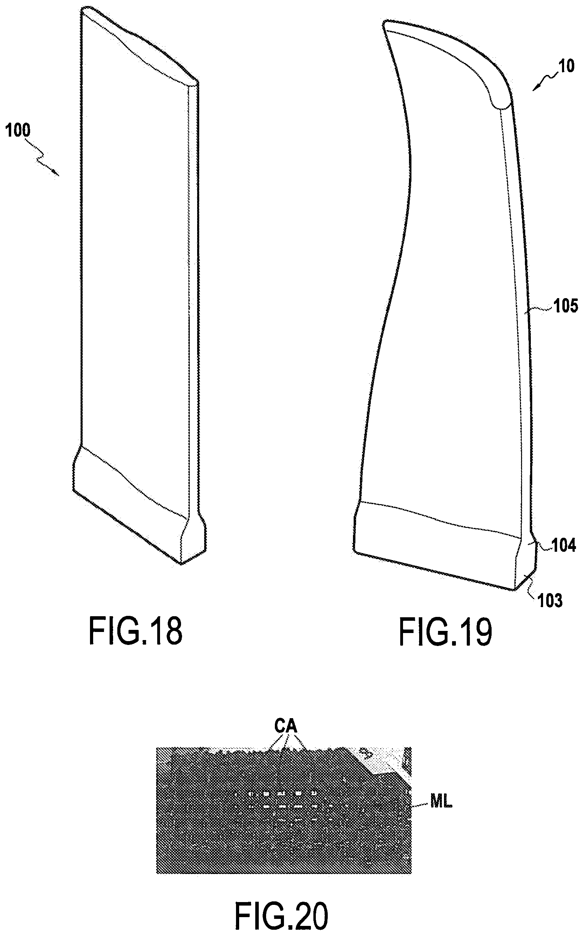

A titre illustratif, la figure 20 montre un exemple de texture Mock Leno ML utilisable dans le cœur de la première partie de la structure fibreuse. On peut noter la présence des canaux traversants CA ménagés dans l'épaisseur de la texture et lui conférant une structure aérée, facilement infiltrable par la matrice.

La structure fibreuse selon l'invention peut être tissée notamment, mais non exclusivement, à partir de fils de fibres de carbone, de fibres céramique telles que du carbure de silicium, ou de fibres d'oxyde tel que de l'alumine.

Une fois le tissage de la structure fibreuse 200 achevé, on découpe les fils non tissés. On obtient alors la préforme fibreuse 100 illustrée sur la figure 18 et tissée en une seule pièce.

On procède ensuite à la densification de la préforme fibreuse 100 afin de former une aube 10 en matériau composite illustrée sur la figure 19. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou encore suivant un enchaînement de ces deux procédés.

Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La densification de la préforme fibreuse peut-être également réalisée, de façon connue, par voie gazeuse par infiltration chimique en phase vapeur de la matrice (CVI). La préforme fibreuse correspondant au renfort fibreux de l'aube à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au cœur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Déposition") qui conduisent exclusivement à un dépôt à la surface du matériau.

La formation d'une matrice SiC peut être obtenue avec du méthyltrichlorosilane (MTS) donnant du SiC par décomposition du MTS tandis qu'une matrice carbone peut être obtenue avec des gaz hydrocarbures tels que méthane et/ou propane donnant le carbone par craquage.

Une densification combinant voie liquide et voie gazeuse peut être également utilisée pour faciliter la mise en œuvre, limiter les coûts et les cycles de fabrication tout en obtenant des caractéristiques satisfaisantes pour l'utilisation envisagée.

On peut encore utiliser un procédé d'infiltration à l'état fondu (« Melt-Infiltration ») pour former la matrice dans la porosité de la préforme fibreuse. Dans ce type de procédé, la matrice est formée par infiltration par du silicium ou par un alliage de silicium à l'état fondu. On peut, avant infiltration, introduire dans la porosité de la préforme fibreuse des particules céramiques ou carbone. Les particules céramiques peuvent par exemple être des particules de carbure de silicium. Lorsque des particules de carbone sont introduites, ces dernières réagissent avec le silicium fondu introduit pour former du carbure de silicium. Les particules céramiques ou carbone peuvent être introduites par voie barbotine.

Les procédés de densification décrits ci-avant permettent de réaliser, à partir de la structure fibreuse de l'invention, principalement des pièces en matériau composite à matrice organique (CMO), à matrice carbone (C/C) et à matrice céramique (CMC).

Dans le cas de la réalisation d'une pièce en matériau composite oxyde/oxyde, la structure fibreuse est imprégnée avec une barbotine chargée de particules d'oxyde réfractaire. Après élimination de la phase liquide de la barbotine, la préforme ainsi obtenue est soumise à un traitement thermique afin de fritter les particules et obtenir une matrice d'oxyde réfractaire. L'imprégnation de la structure peut être réalisée avec des procédés utilisant un gradient de pression, comme les procédés de type moulage par injection dits « RTM » ou aspiration de poudre submicronique dits « APS ».

Après densification, on obtient une aube 10 en matériau composite qui, comme illustrée sur la figure 19, comporte dans sa partie inférieure un pied 103 formé par la partie de surépaisseur 203 de la structure fibreuse 200 qui se prolonge par une échasse 104 formée par la partie d'épaisseur décroissante 204 de la structure 200 et une pale 105 formée par la partie 205 de la structure fibreuse 200.

La structure fibreuse et son procédé de fabrication selon la présente invention peuvent notamment être utilisés pour réaliser des aubes de turbomachine présentant une géométrie plus complexe que l'aube représentée sur la figure 19, comme des aubes comportant, en outre de celle de la figure 19, une ou plusieurs plateformes permettant de réaliser des fonction comme celles d'étanchéité de veine, d'antibasculement, etc..

## Revendications

1. Structure fibreuse (200) comprenant une pluralité de couches de trame et de couches de chaîne liées entre elles suivant un tissage tridimensionnel multicouche, la structure fibreuse (200) comprenant au moins des première (203) et deuxième (204) parties adjacentes dans la direction chaîne, la première partie (203) présentant, dans une direction perpendiculaire aux directions chaîne et trame, une épaisseur supérieure à l'épaisseur de la deuxième partie (204),
la première partie (203) comprenant à cœur (2031) au moins une texture fibreuse (ML) obtenue par tissage tridimensionnel des couches de chaîne et de trame, **caractérisée en ce que** ladite au moins texture fibreuse est sous la forme d'une grille à armure de tissage Mock Leno, ladite au moins une texture (ML) étant présente entre des peaux (2032 ; 2033) présentes à la surface de la première partie (203) et étant liée aux peaux (2032 ; 2033) par des fils de chaîne (C3 ; C16) appartenant auxdites peaux qui sont déviés localement dans ladite texture.

2. Structure fibreuse (200) selon la revendication 1, dans laquelle la texture fibreuse (ML) à armure de tissage Mock Leno présente, dans une direction perpendiculaire aux directions chaîne et trame, une épaisseur décroissante en direction de la deuxième partie (204).

3. Structure fibreuse (200) selon l'une quelconque des revendications 1 ou 2, dans laquelle les première (203) et deuxième (204) parties comprennent le même nombre de fils de chaîne tissés continument entre lesdites première et deuxième parties et dans laquelle la première partie (203) comprend à cœur un nombre de couches de fils de chaîne supérieur au nombre de couches de fils de chaîne présentes à cœur de la deuxième partie (204).

4. Structure fibreuse (200) selon la revendication 3, dans laquelle la première partie (203) comprend à cœur un nombre de couches de fils de chaîne égal au double du nombre de couches de fils de chaîne présentes à cœur de la deuxième partie (204).

5. Structure fibreuse (200) selon l'une quelconque des revendications 1 à 4, dans laquelle la structure (200) comprend des fils de carbone ou des fils en matériau céramique.

6. Pièce en matériau composite (10) comprenant un renfort fibreux densifié par une matrice, ledit renfort fibreux étant constitué par une structure fibreuse (200) selon l'une quelconque des revendications 1 à 5.

7. Pièce (10) selon la revendication 6, ladite pièce (10) correspondant à une aube de turbine, la première partie (203) de la structure fibreuse constituant la partie de pied d'aube (103) du renfort fibreux.

8. Procédé de fabrication d'une structure fibreuse (200) par tissage tridimensionnel multicouche entre une pluralité de couches de trame et de couches de chaîne, la structure fibreuse (200) comprenant au moins des première (203) et deuxième (204) parties adjacentes dans la direction chaîne, la première partie (203) présentant, dans une direction perpendiculaire aux directions chaîne et trame, une épaisseur supérieure à l'épaisseur de la deuxième partie (204),
la réalisation de la première partie (203) comprenant une étape de tissage tridimensionnel des couches de chaîne et de trame, **caractérisé en ce que** l'on forme durant l'étape de tissage tridimensionnel une texture fibreuse (ML) sous la forme d'une grille à armure de tissage Mock Leno à cœur (2031) de la première partie (203) ainsi que des peaux (2032 ; 2033) en surface de la première partie, l'armure de tissage des peaux (2032 ; 2033) étant modifiée localement de manière à dévier certains fils de chaîne (C3 ; C16) desdites peaux (2032 ; 2033) et à les tisser avec la texture (ML) à armure Mock Leno.

9. Procédé selon la revendication 8, dans lequel la texture (ML) à armure Mock Leno présente, dans une direction perpendiculaire aux directions chaîne et trame, une épaisseur décroissante en direction de la deuxième partie (204).

10. Procédé selon l'une quelconque des revendications 8 et 9, dans lequel les première (203) et deuxième (204) parties comprennent le même nombre de fils de chaîne tissés continument entre lesdites première (203) et deuxième (204) parties et dans lequel la première partie (203) comprend à cœur un nombre de couches de fils de chaîne supérieur au nombre de couches de fils de chaîne présentes à cœur de la deuxième partie (204).

11. Procédé selon la revendication 10, dans lequel la première partie (203) comprend à cœur un nombre de couches de fils de chaîne égal au double du nombre de couches de fils de chaîne présentes à cœur de la deuxième partie (204).

12. Procédé selon l'une quelconque des revendications 8 à 11, dans lequel la structure fibreuse (200) comprend des fils de carbone ou des fils en matériau céramique.

## Patentansprüche

1. Faserstruktur (200), die eine Vielzahl von Schussschichten und von Kettschichten umfasst, die untereinander gemäß einem mehrschichtigen dreidimensionalen Geflecht verbunden sind, wobei die Faserstruktur (200) mindestens einen ersten (203) und einen zweiten (204) in der Kettrichtung benachbarten Teil umfassen, wobei der erste Teil (203) in einer Richtung senkrecht zu der Kett- und der Schussrichtung eine Dicke aufweist, die größer als die Dicke des zweiten Teils (204) ist,
der erste Teil (203) im Kern (2031) mindestens eine Fasertextur (ML) umfasst, die durch dreidimensionales Flechten der Kett- und der Schussschichten erhalten wird, **dadurch gekennzeichnet, dass** die mindestens eine Fasertextur die Form eines Netzes mit Scheindrehergeflechtbindung aufweist, wobei die mindestens eine Textur (ML) zwischen Hüllen (2032; 2033) vorhanden ist, die an der Oberfläche jedes Teils (203) vorhanden sind, und mit den Hüllen (2032; 2033) durch Kettfäden (C3; C16) verbunden ist, die zu den Hüllen gehören und in der Textur lokal abgelenkt sind.

2. Faserstruktur (200) nach Anspruch 1, wobei die Fasertextur (ML) mit Scheindrehergeflechtbindung in einer Richtung senkrecht zu der Kett- und der Schussrichtung eine in Richtung des zweiten Teils (204) abnehmende Dicke aufweist.

3. Faserstruktur (200) nach einem der Ansprüche 1 oder 2, wobei der erste (203) und der zweite Teil (204) eine gleiche Anzahl von Kettfäden umfassen, die ununterbrochen zwischen dem ersten und dem zweiten Teil geflochten sind, und wobei der erste Teil (203) im Kern eine Anzahl von Kettfädenschichten aufweist, die größer als die Anzahl von Kettfädenschichten ist, die im Kern des zweiten Teils (204) vorhanden sind.

4. Faserstruktur (200) nach Anspruch 3, wobei der erste Teil (203) im Kern eine Anzahl von Kettfädenschichten umfasst, die gleich dem Doppelten der Anzahl von Kettfädenschichten ist, die im Kern des zweiten Teils (204) vorhanden sind.

5. Faserstruktur (200) nach einem der Ansprüche 1 bis 4, wobei die Struktur (200) Kohlenstofffäden oder Fäden aus Keramikmaterial umfasst.

6. Bauteil aus Verbundmaterial (10), das eine durch eine Matrix verdichtete Faserverstärkung umfasst, wobei die Faserverstärkung aus einer Faserstruktur (200) nach einem der Ansprüche 1 bis 5 besteht.

7. Bauteil (10) nach Anspruch 6, wobei das Bauteil (10) einer Turbinenschaufel entspricht, wobei der erste Teil (203) der Faserstruktur den Schaufelfuß (103) der Faserverstärkung bildet.

8. Verfahren zur Herstellung einer Faserstruktur (200) durch mehrschichtiges dreidimensionales Flechten zwischen einer Vielzahl von Schussschichten und Kettschichten, wobei die Faserstruktur (200) mindestens einen ersten (203) und einen zweiten (204) in der Kettrichtung benachbarten Teil umfassen, wobei der erste Teil (203) in einer Richtung senkrecht zu der Kett- und der Schussrichtung eine Dicke aufweist, die größer als die Dicke des zweiten Teils (204) ist,
wobei die Herstellung des ersten Teils (203) einen Schritt des dreidimensionalen Flechtens der Kett- und Schussschichten umfasst, **dadurch gekennzeichnet, dass** während des Schritts des dreidimensionalen Flechtens eine Fasertextur (ML) mit der Form eines Netzes mit Scheindrehergeflechtbindung im Kern (2031) des ersten Teils (203) sowie Hüllen (2032; 2033) an der Oberfläche des ersten Teils gebildet werden, wobei die Geflechtbindung der Hüllen (2032; 2033) derart lokal geändert wird, dass bestimmte Kettfäden (C3; C16) der Hüllen (2032; 2033) abgelenkt werden und diese mit der Textur (ML) mit Scheindreherbindung geflochten werden.

9. Verfahren nach Anspruch 8, wobei die Textur (ML) mit Scheindreherbindung in einer Richtung senkrecht zu der Kett- und der Schussrichtung eine in der Richtung des zweiten Teils (204) abnehmende Dicke aufweist.

10. Verfahren nach einem der Ansprüche 8 und 9, wobei der erste (203) und der zweite (204) Teil die gleiche Anzahl von zwischen dem ersten (203) und dem zweiten (204) Teil ununterbrochen geflochtenen Fäden aufweist, und wobei der erste Teil (203) im Kern eine Anzahl von Kettfädenschichten aufweist, die größer als die Anzahl von im Kern des zweiten Teils (204) vorhandenen Kettfädenschichten ist.

11. Verfahren nach Anspruch 10, wobei der erste Teil (203) im Kern eine Anzahl von Kettfädenschichten aufweist, die gleich dem Doppelten der Anzahl von im Kern des zweiten Teils (204) vorhandenen Kettfädenschichten ist.

12. Verfahren nach einem der Ansprüche 8 bis 11, wobei die Faserstruktur (200) Kohlenstofffäden oder Fäden aus Keramikmaterial umfasst.

## Claims

1. A fiber structure (200) comprising a plurality of weft layers and of warp layers interlinked by multilayer three-dimensional weaving, the fiber structure (200) having at least first and second portions (203 and 204) that are adjacent in the warp direction, the first portion (203) presenting, in a direction perpendicular to the warp and weft directions, a thickness that is greater than the thickness of the second portion (204),
the first portion (203) has at its core (2031) at least one fiber fabric (ML) obtained by three-dimensional weaving of warp yarns and weft yarns, **characterized in that** said at least one fiber fabric is in the form of a Mock-Leno weave grid, said at least one fabric (ML) being present between two skins (2032; 2033) present at the surface of the first portion (203) and being linked to the skins (2032; 2033) by warp yarns (C3; C16) belonging to said skins that are locally deflected into said fabric.

2. A fiber structure (200) according to claim 1, wherein the Mock-Leno weave fiber fabric (ML) presents, in a direction perpendicular to the warp and weft directions, a thickness that decreases going towards the second portion (204).

3. A fiber structure (200) according to claim 1 or claim 2, wherein the first and second portions (203 and 204) have the same number of warp yarns woven continuously between said first and second portions, and wherein the first portion (203) includes in its core a number of warp yarn layers that is greater than the number of warp yarn layers present in the core of the second portion (204).

4. A fiber structure (200) according to claim 3, wherein the first portion (203) includes in its core a number of warp yarn layers that is equal to twice the number of warp yarn layers present in the core of the second portion (204).

5. A fiber structure (200) according to any one of claims 1 to 4, wherein the structure (200) comprises carbon yarns or ceramic material yarns.

6. A composite material part (10) comprising fiber reinforcement densified by a matrix, said fiber reinforcement being constituted by a fiber structure (200) according to any one of claims 1 to 5.

7. A part (10) according to claim 6, said part (10) corresponding to a turbine blade, the first portion (203) of the fiber structure constituting the blade root portion (103) of the fiber reinforcement.

8. A method of fabricating a fiber structure (200) by multilayer three-dimensional weaving between a plurality of weft yarns and of warp yarns, the fiber structure (200) having at least first and second portions (203 and 204) that are adjacent in the warp direction, the first portion (203) presenting, in a direction perpendicular to the warp and weft directions, a thickness greater than the thickness of the second portion (204),
the first portion (203) is made by means of a step of three-dimensionally weaving warp and weft layers, **characterized in that** a fiber fabric (ML) is formed in the form of a Mock-Leno weave grid in the core (2031) of the first portion (203) together with skins (2032; 2033) at the surface of the first portion during the three-dimensionally weaving step, the weave of the skins (2032; 2033) being modified locally so as to deflect certain warp yarns (C3; C16) from said skins (2032; 2033) and weave them with the Mock-Leno weave fabric (ML).

9. A method according to claim 8, wherein the Mock-Leno weave fabric (ML) presents, in a direction perpendicular to the warp and weft directions, a thickness that decreases going towards the second portion (204).

10. A method according to claim 8 or claim 9, wherein the first and second portions (203 and 204) have the same number of warp yarns woven continuously between the first and second portions (203 and 204), and wherein the first portion (203) comprises in its core a number of warp yarn layers that is greater than the number of warp yarn layers present in the core of the second portion (204).

11. A method according to claim 10, wherein the first portion (203) comprises in its core a number of warp yarn layers equal to twice the number of warp yarn layers present in the core of the second portion (204).

12. A method according to any one of claims 8 to 11, wherein the fiber structure (200) comprises carbon yarns or ceramic material yarns.
